# EUROPEAN PATENT APPLICATION

(11) **EP 3 477 403 A2**
(43) Date of publication of application: **01.05.2019**
(21) Application number: 18210588.2
(22) Date of filing: 30.11.2016
(51) Int. Cl.: G04G 17/04, G04G 17/08, G04G 21/00

(54) **SMARTWATCH**

(62) Divisional of application: 16201502.8
(71) Applicant: Manufacture Modules Technologies Sarl, 1228 Plan-les-Ouates (CH); Frédérique Constant S.A., 1228 Plan-les-Ouates (CH)
(72) Inventor: FRABOULET, Philippe, 1228 Plan-les-Ouates (CH); KOESLAG, Pim, 1228 Plan-les-Ouates (CH); DA SILVA MATOS, Manuel, 1228 Plan-les-Ouates (CH)
(74) Representative: Weihs, Bruno Konrad

(57) **Abstract**

A wearable smart device (22) is enclosed in a water tight casing (32), whereby the water tight casing further comprises an internal rechargeable battery (38), the water tight casing further comprising a first metal contact (33) connected to a first pole of the internal rechargeable battery (38) and isolated from the water tight casing (32), and a pusher button (36a), configured such to function both as a user interface button, and a second contact to a second pole of the rechargeable battery (38), when it is pressed towards the water tight casing (32). An absence of contact between the pusher button and the second pole of the internal rechargeable battery (38), when the pusher button is not pressed contributes to the water resistance of the wearable smart device and the water tight casing (32).

## Description

### TECHNICAL FIELD

The present invention relates to a straps, a bracelet, a band, a wristwatch and wristwatch parts that contain at least one of electronics and a wireless communication system.

### BACKGROUND ART

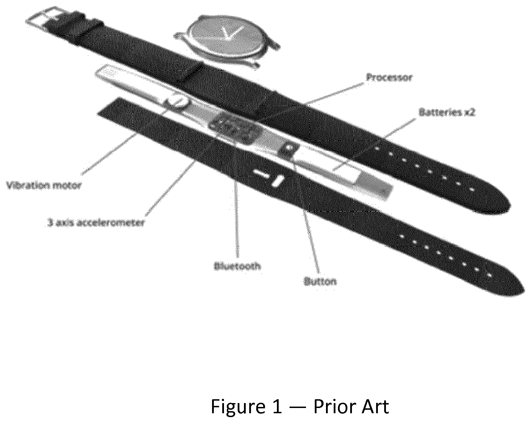

Devices with embedded sensors and wireless communication that are arranged in the watch, under the watch head or in the strap are known from prior art. One example is the watch and strap offered under the name *Classi* on web page www.maintool.me. The *Classi* product is configured to upgrade a classic watch by replacing the conventional strap by a smart strap that gives the watch smart features. Figure 1 illustrates the *Classi* strap and a wristwatch clock in an exploded view. The *Classi* integrates a vibration motor, a 3-axis accelerometer, a Bluetooth® communication module, a processor, an actuator button and batteries into a classic leather watch strap. According to the manufacturer *Classi* enables to track the user's activity, receive notifications via vibration, navigate to a destination handsfree and send out for help with the push of the button. *Classi* also has a phone loss prevention feature and will vibrate strongly if the user is forgetting his phone. The smart strap interacts with a dedicated application executed on an associated smartphone device. The application allows to configure the different settings to run the notifications and displays all the data collected by means of the smart strap device. In addition, the application allows to activate a navigation mode and choose a destination to which the user is heading. However in the design of this product, the electronic modules, sensors and batteries are enclosed inside a classical leather strap thereby making the strap thicker than the initial strap. Since the strap also passes under the body of the watch the overal thickness of the wristwatch is increased as compared to the classical wristwatch. Furthermore the strap may be subject to extreme bending which in turn may compromise the integrity of the enclosed electronic modules, sensors and/or battery, and possibly also break any watertight sealing through undue mechanical stress.

US publication US2016029778A1 discloses a further design for a wristwatch in which a dedicated housing contains electronic elements and battery, whereby the housing superposes over the strap, thereby increasing the overall thickness of the strap. This is a disadvantage since watchmakers have always tried to make watches as thin as possible.

Hence one of the problems to be solved by the present invention, is to add electronics functions to a watch, including for example wireless connectivity, in a manner that works with most types of watches, further in a manner that is water resistant, preserves an horological look of the watch and resists to mechanical stress, while addressing inconveniences experienced in prior art devices, such as changes to the appearance of the watch, or increased thickness of the watch body and/or strap when components are located between the wrist and the watch head.

### SUMMARY OF THE INVENTION

In a first aspect the invention provides a wearable smart device for a wristwatch strap, comprising connection means configured to detachably mount the wearable smart device to the wristwatch strap on one of the sides of the wearable smart device and a buckle on an opposite one of the sides of the wearable smart device. The wearable smart device is configured to comprise an electronic module enclosed in a water tight casing. The wearable smart device is further configured such that a thickness of the wearable smart device is substantially the same or less than a thickness of the wristwatch strap. The wearable smart device is distinct from an intended watch body to be mounted on the wristwatch strap. The wearable smart device is configured to form an elongation of the wristwatch strap at the time of intended wearing of the wristwatch strap by an intended user, such that at the time of intending wearing the overall thickness of the wristwatch strap and the wearable smart device together remains substantially the same or less than a thickness of the wristwatch strap.

In a preferred embodiment the electronic module is designed to execute a plurality of electronic functions; and the wearable smart device further comprises at least a sensor functionally connected to a processor of the wearable smart device (22) to enable the implementation of the plurality of electronic functions which comprise at least one of the following list:
- step counting using a step counting algorithm, whereby the at least one sensor comprises an accelerometer component,
- sleep monitoring using a sleep monitoring algorithm, whereby the at least one sensor comprises the accelerometer component,
- temperature measurement using one of the at least one sensors as appropriate,
- humidity measurement using one of the at least one sensors as appropriate,
- heart rate measurement using one of the at least on sensors as appropriate, and a heart rate monitoring algorithm, and
- UV measurement using one of the at least one sensors as appropriate.

In a further preferred embodiment, the wearable smart device further comprises a pusher button mounted on the water thight casing, which is configured to enable interaction of an intended user with the wearable smart device, whereby the wearable smart device is configured to react to different patterns of pressing of the pusher button, to trigger and launch in the wearable smart device at least an electronic function corresponding to the patterns of pressing.

In a further preferred embodiment, the electronic module further comprises a PCB which is configured such that at the pressing of the pusher button, an electronic contact is created on the PCB and this electronic contact sends an information to the processor.

In a further preferred embodiment the wearable smart device comprises a wireless communication interface which is configured to enable communication between the wearbale smart device and a intended companion mobile application running on a distinct terminal.

In a further preferred embodiment, the wearable smart device further comprises a wireless communication interface which is configured to enable communication between the wearable smart device and an intended companion application running on a distinct terminal.

In a further preferred embodiment, the wearable smart device further comprises a processor; and at least a sensor functionally connected to the processor. The processor is configured to conduct a bidirectional communication by means of the wireless communication interface, the bidirectional communication enabling an intended user of the intended companion application to configure the wearable smart device and to read data measured by means of the at least one sensor.

In a further preferred embodiment the processor is further configured to send action information to the intended companion application, that triggers the intended companion application to execute a corresponding action.

In a further preferred embodiment, the connection means comprises at least a connection pin.

In a further preferred embodiment, the wearable smart device further comprises a battery enclosed in the water tight casing.

In a further preferred embodiment, a first one of the poles of the rechargeable battery is permanently accessible from an outside of the water tight casing. The wearable smart device further comprises a pusher button mounted on the water thight casing, which is configured as follows: when the pusher button is un-pressed, a second one of the poles of the rechargeable battery is electrically isolated from an outside of the water tight casing; when the pusher button is pressed it is in contact with the second one of the poles and thereby establishes an electrical contact between the second one of the poles and the outside of the water tight casing.

In a further preferred embodiment, a width of the water tight casing corresponds substantially to a width of the strap.

In a second aspect, the invention provides a wristwatch strap comprising a strap, a buckle, and connection means to detachably mount the buckle to the strap, the wristwatch strap further comprising a wearable smart device according to any one of embodiments described herein above in the present chapter, whereby the connection means are configured to detachably mount the buckle on a first side of the wearable smart device, and to detachably mount the strap on a second side of the wearable smart device opposite from the first side. The wearable smart device is distinct from an intended watch body to be mounted on the wristwatch strap.

In a third aspect, the invention provides a wearable smart device enclosed in a watertight casing, whereby the water tight casing further comprises an internal rechargeable battery. The water tight casing further comprises a first metal contact connected to a first pole of the internal rechargeable battery and isolated from the water tight casing, and a pusher button, configured such to function both as
- a user interface button, and
- a second contact to a second pole of the rechargeable battery, when it is pressed towards the water tight casing.
An absence of contact between the pusher button and the second pole of the internal rechargeable battery (38), when the pusher button is not pressed contributes to the water resistance of the wearbale smart device and the water tight casing.

### BRIEF DESCRIPTION OF THE DRAWINGS

The invention will be better understood through the detailed description of preferred embodiments and in reference to the figures, wherein
figure 1 shows a smart strap watch according to prior art,
figure 2 shows a typical wristwatch according to prior art,
figure 3 shows an example of a wearable smart device mounted in a wristwatch strap according to a preferred embodiment,
figure 4 shows an exploded view of a wearable smart device according to a preferred embodiment of the invention,
figure 5 shows a block diagram of the electronics in the wearable smart device according to a preferred embodiment of the invention,
figure 6a shows a diagram of the wearable smart device, showing a case, inside electronics, arechargeable battery and battery contacts according to a preferred embodiment of the invention,
figure 6b shows a diagram of the wearable smart device of figure 6a when it is clipped in a charger,
figure 7 a preferred embodiment of the invention in which he pusher button is implemented ina buckle case, and
figure 8, shows a preferred embodiment of the invention, comprising an example implementation of a pusher button as a pusher button and a rechargeable battery contact, in a wrist watch case.

### DESCRIPTION OF PREFERRED EMBODIMENTS OF THE INVENTION

To solve at least the above discussed problem, the wireless connectivity electronics and any electronics implementing the functions are put in a hard case which may become part of the watch strap buckle. The case is attached to one end of the strap with standard strap mechanisms. A special mechanism enables to give access to the battery contacts when charging and isolating them from the outside when not charging.

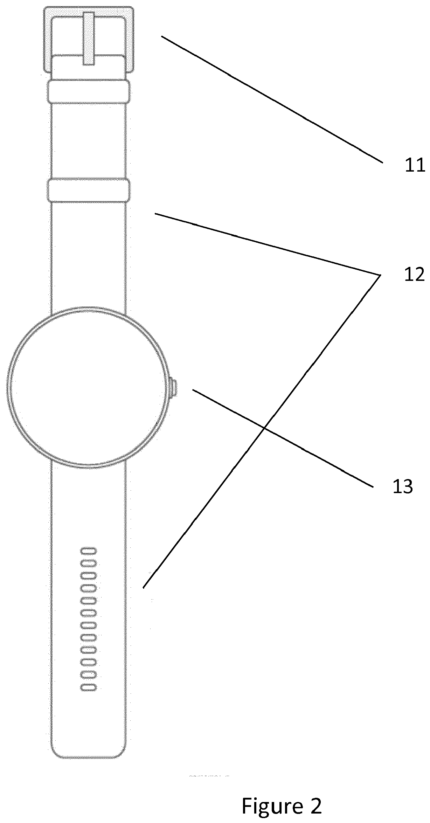

Looking at figure 2, this represents a typical watch, more particularly a wristwatch, in which a wristwatch body 13 is shown together with a strap 12 attached to the body and configured to wear the wristwatch on the wrist of an intended user (not shown in figure 2) by means of a buckle 11 located at one extremity of the strap 12.

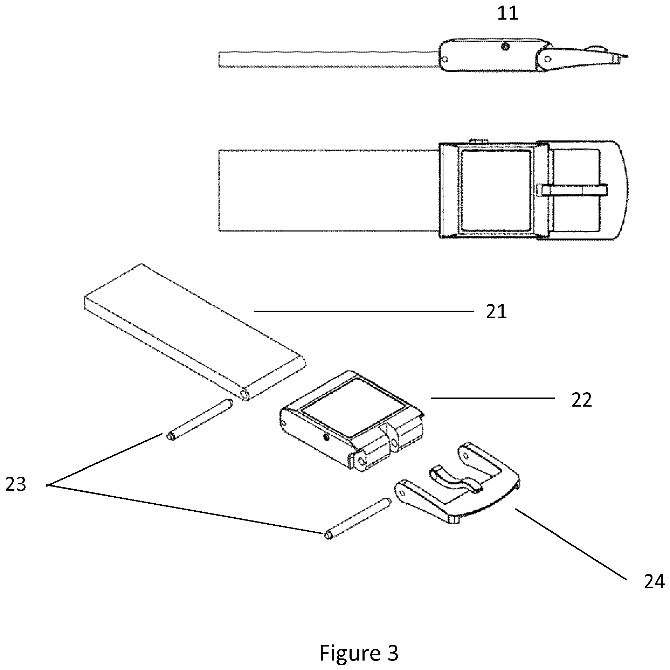

Referring to figure 3, this shows a side view (upper part of the figure), a view from above (middle illustration of the figure) and an exploded view of an electronics device 22-or wearable smart device-mounted in a wristwatch strap 21 according to the invention. Hence the electronic device 22 becomes a part of the overlal strap of the wristwatch, which is detachable mounted to the strap 21 on one of its sides and to a buckle 24 on an opposite side using connection means, for example conventional pins 23.

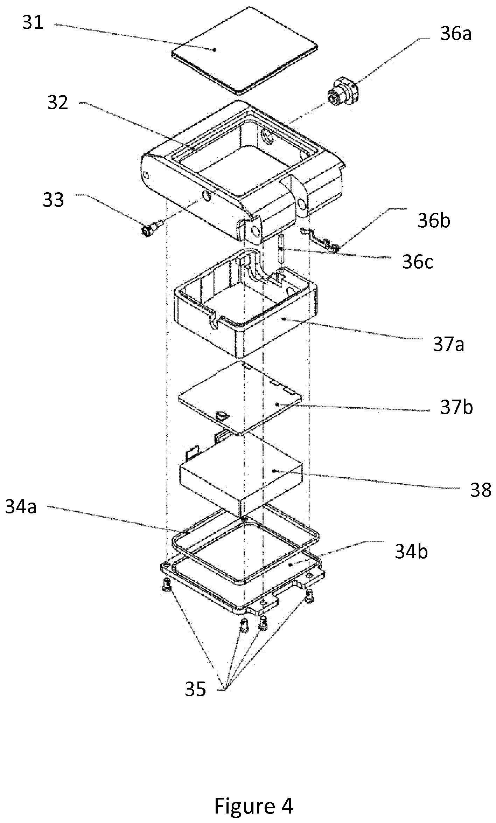

Looking at Figure 4, this shows the electronics device-or wearable smart device-according to an example of the invention, which comprises a plurality of parts, including a case comprising:
- a body 32,
- a cover 31,
- a case back 34b,
- a battery contact 33, and
- a pusher button 36a.

An electronics module, such as for example an electronics PCB 37a fits in a plastic holder 37b.

The body 32 further comprises a battery 38. In a preferred embodiment the battery 38 is of a rechargeable type.

The case is closed by means of screws 35 and water resistance is ensured by means of a case back joint 34a.

The body 32 and the case back 34b may for example be made from one or more of materials of the following list comprising metal, glass fiber, and plastic.

The cover 31 may for example be made from one or more of materials from the following list comprising glass, fiber glass, and plastic.

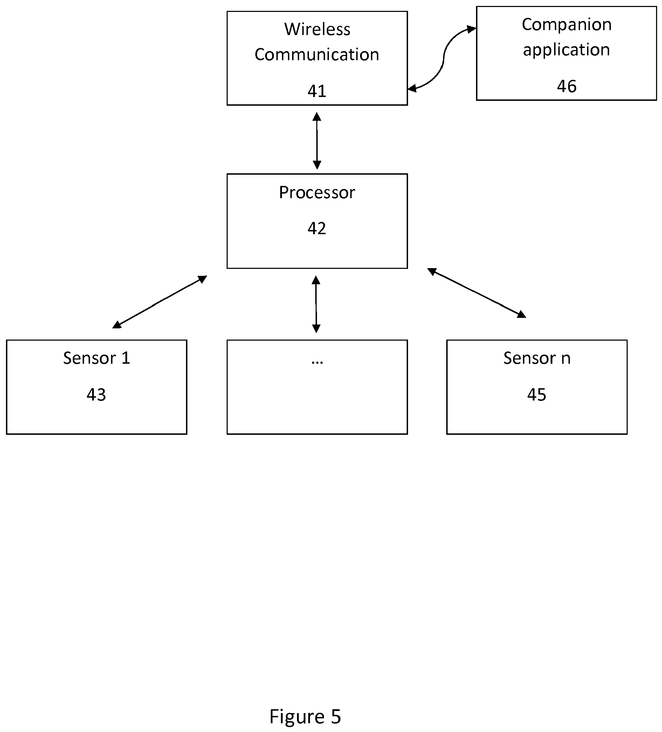

Referring to the block diagram of figure 5, this illustrates examples of electronic functions that may be realized by the PCB 37b (the PCB is not shown as such in figure 5), at least including:
- a wireless communication interface 41,
- at least one or a plurality of sensors 43-45, which may for example be biometric sensors, and
- sensor analysis and treatment implemented by an embedded processor 42.

In a preferred embodiment, the wireless communication interface 41 is a Bluetooth® Low Energy type interface, that comprises a Bluetooth® Low Energy chip and a ceramic antenna (not shown in the figures). The wireless communication interface 41 enables the wearable smart device to communicate with a smartphone or a tablet (not illustrated in the figures), whereby the communication on the smartphone or a tablet is conducted by a companion mobile application 46 running on the smartphone or the tablet.

Sensor measurements using sensors 43-45 may for example be:
- step counting using an accelerometer component (not shown in the figure 5) and a step counting algorithm,
- sleep monitoring using the accelerometer component and a sleep monitoring algorithm,
- temperature measurement using one of the electronic sensors 43-45 as appropriate,
- humidity measurement using one of the electronic sensors 43-45 as appropriate,
- heart rate measurement using one of the electronic sensors 43-45 as appropriate, and a heart rate monitoring algorithm, and
- UV measurement using one of the electronic sensors 43-45 as appropriate.

Via the wireless communication interface 41, the processor 42 communicates with the companion application 46 running on the smartphone or the tablet. The companion application 46 enables an interface for the user who may configure the wearable smart device and see sensor data thanks to it. The wearable smart device uses the companion application 46 as a way to communicate with the smartphone or the tablet, to get data and trigger actions.

Referring again to figure 4, when the pusher button 36a is pressed, it creates an electrical contact on the electronic PCB 37b, which triggers the sending of an information to the processor 42 of figure 5. The processor 42 interacts with the sensors 43, 45 and with the wireless communication interface 41 to launch different actions. According to the configuration of the processor 42, one of the following action may be launched:
- synchronizing sensor data with the companion application,
- changing activity recording mode, e.g., on of day or night mode,
- make the intended smartphone ring,
- trigger a camera of the smartphone,
- make the smartphone send a message or email, and
- launching an other action in the smartphone or the tablet, through the companion application 46.

In a preferred embodiment, when the pusher button 36a is pressed more than 5 seconds or when the internal accelerometer or movement sensor (not shown in figure 5) records a drop or fall, the wearable smart device transmits the information to the companion application so it can send an alarm message to the concerned people.

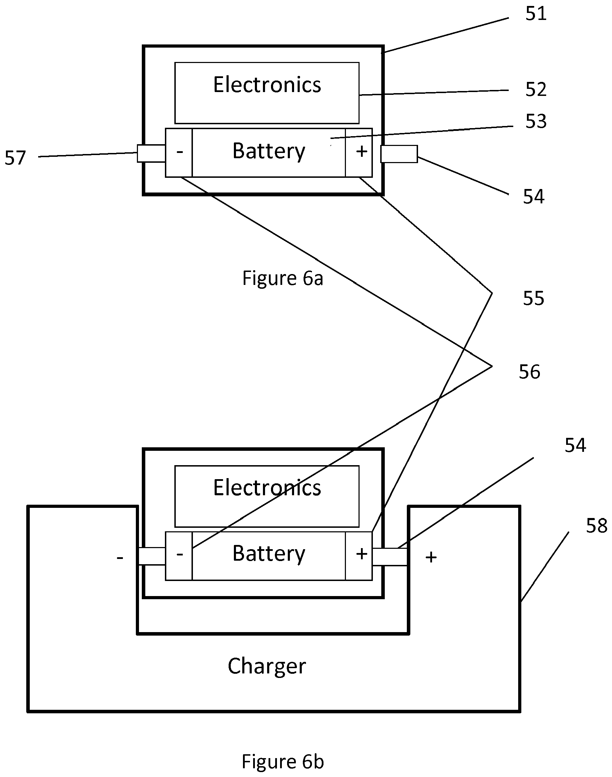

Figure 6a shows a diagram of a case 51 of the wearable smart device according to a preferred embodiment. The case is water resistant. When the pusher button 54 is not pressed-this case is represented in figure 6a-the positive contact 55 of the rechargeable battery 53 is isolated from the case 51 and from the outside. Only the negative contact 56 is accessible from the outside via a metal contact 57 (corresponding to contact 33 of figure 4). Thus, even in water, the contacts of the battery are isolated and no short-circuit is possible.

Figure 6b shows a diagram of the wearable smart device when it is plugged in a charger pod 59 as appropriate. In this position the pusher button 54-corresponding to pusher button 36a of figure 4-is pushed and a contact exists between the pusher button 54 and the positive battery contact 55. Accordingly the pusher button 54 may be made out of a conductive material, such as a metal. Thus the charger 58 has access to both contacts 55, 56 of the rechargeable battery 53 and can recharge it.

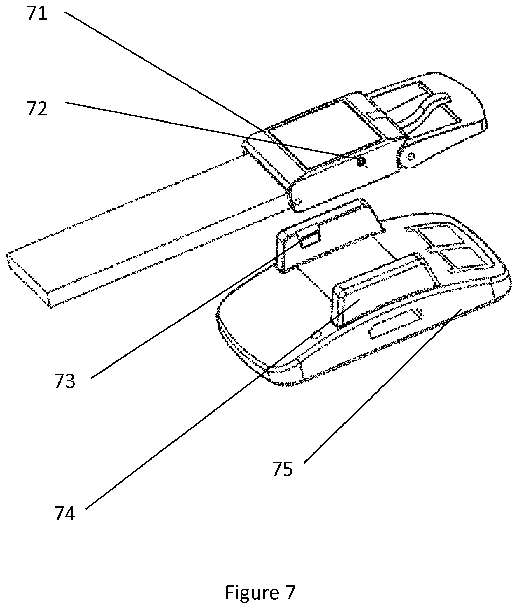

Figure 7 illustrates an implementation of the pusher button in a buckle case embodiment 71. The external contacts of the case, including the positive contact-which is not visible in figure 7-and the negative contact 72 are on the sides of the bukle case 71. When the buckle case 71 is placed in the charger pod 75, the external contacts of the case, including negative contact 72 are connected respectively with charger pod contacts 73 and 74. When the buckle case 71 is placed in the charger pod 75, the pusher button is in contact with the positive contact of the battery (not visible in figure 7, but the principle is seen in figure 6b) and thus enables the charging of it by the charger pod 75.

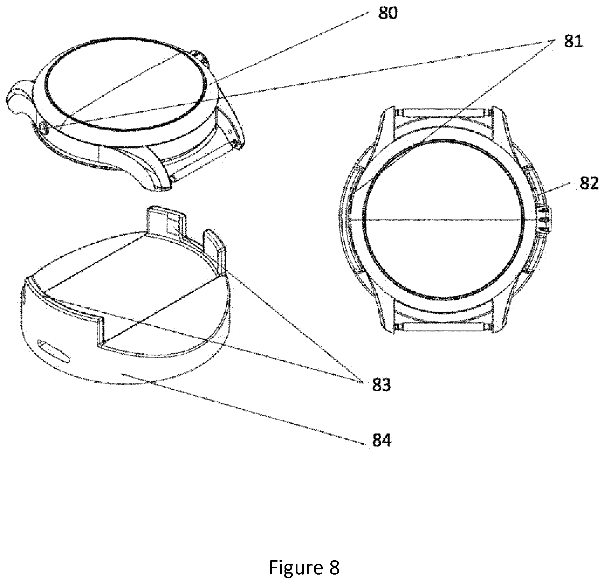

Figure 8 illustrates an other implementation of a pusher button as a pusher button and a rechargeable battery contact, in a wrist watch case 80. The watch case 80 has two contacts, and a pusher button 82. The contacts comprise a negative contact 81. The negative contact 81 is connected to the negative contact of the rechargeable battery (not shown in figure 8) inside the case 80. The pusher button 82 when it is un-pressed is not connected to the positive contact of the rechargeable battery (not visible in figure 8). When the watch is in a charger pod 84, the pusher button 82 is pressed and gets in contact with the positive contact of the internal rechargeable battery (not visible in figure 8). Thus both contacts 83 of charger pod 84 are in contact with the contacts of the case 81, including the pusher button 82 which is a contact too, and in contact with the contacts of the internal rechargeable battery (not visible in figure 8). So the charging of the battery is made possible. When the button is un-pressed, such as for example upon removal of the case 80 out of the charger pod 84, the rechargeable battery contacts are isolated from the water tight casing 80 and the system remains waterproof.

The electronics device 22 is configured to have a thickness that substantially corresponds to that of a conventional strap 21's thickness or is less than the conventional strap's thickness. In addition the electronics device 22 is configured to have a width substantially the same as that of the conventional strap. In addition the electronics device 22 may be configured to be attached to the strap and the buckle using conventional means such as the pins 23. The wearable smart device 22 is further configured to form an elongation of the wristwatch strap 21 at the time of intended wearing of the wristwatch strap by an intended user, such that at the time of intending wearing the overall thickness of the wristwatch strap and the wearable smart device remains substantially the same or less than a thickness of the wristwatch strap. With the described invention, the position and appearance of the watch head of the wristwatch are not impacted and remain the same as in a conventional wristwatch. Moreover the electronics fit inside the water resistant hard case of the wearable smart device 22. The mechanical and humidity stress exerted on the content of the hard case remains minimal, which is better for life time of the product.

## Claims

1. A wearable smart device (22) enclosed in a water tight casing (32), whereby the water tight casing further comprises an internal rechargeable battery (38), the water tight casing further comprising
a first metal contact (33) connected to a first pole of the internal rechargeable battery (38) and isolated from the water tight casing (32), and
a pusher button (36a), configured such to function both as
• a user interface button, and
• a second contact to a second pole of the rechargeable battery (38), when it is pressed towards the water tight casing (32);
whereby an absence of contact between the pusher button and the second pole of the internal rechargeable battery (38), when the pusher button is not pressed contributes to the water resistance of the wearable smart device and the water tight casing (32).
